(19) Europäisches Patentamt
European Patent Office
Office européen des brevets

(11) **EP 4 700 454 A1**

(12) **EUROPEAN PATENT APPLICATION**
published in accordance with Art. 153(4) EPC

(43) Date of publication:
**25.02.2026 Bulletin 2026/09**

(21) Application number: **24792582.9**

(22) Date of filing: **10.04.2024**

(51) International Patent Classification (IPC):
**G02B 27/01** (2006.01)   **B60K 35/23** (2024.01)
**G02B 5/122** (2006.01)

(52) Cooperative Patent Classification (CPC):
**B60K 35/23; G02B 5/122; G02B 27/01**

(86) International application number:
**PCT/JP2024/014576**

(87) International publication number:
**WO 2024/219307 (24.10.2024 Gazette 2024/43)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.04.2023  JP 2023068992**

(71) Applicant: **Sony Group Corporation
Tokyo 108-0075 (JP)**

(72) Inventors:
• **KANEDA, Kazumasa
Tokyo 108-0075 (JP)**

• **MIURA, Koji
Tokyo 108-0075 (JP)**
• **TAKAMATSU, Takashi
Tokyo 108-0075 (JP)**
• **OHMI, Motosuke
Tokyo 108-0075 (JP)**
• **KAGOYA, Tsuyoshi
Tokyo 108-0075 (JP)**
• **MORI, Ichiro
Tokyo 108-0075 (JP)**

(74) Representative: **D Young & Co LLP
3 Noble Street
London EC2V 7BQ (GB)**

(54)    **PROJECTION DEVICE**

(57)    A projector according to an embodiment of the present disclosure includes: a display apparatus; a reflective mirror that reflects a light flux outputted from the display apparatus in a predetermined direction; and a retroreflector that reflects the light flux incident via the reflective mirror substantially in an incident direction.

[ FIG. 1 ]

EP 4 700 454 A1

## Description

Technical Field

The present disclosure relates to a projector to be used as, for example, a head-up display.

Background Art

For example, PTL 1 discloses an information display apparatus that aims to relax restrictions on an installation location by using a reflector including a plurality of unit regions two-dimensionally arranged on a main surface.

Citation List

Patent Literature

PTL 1: International Publication No. WO2018/061444

Summary of the Invention

Incidentally, a projector that displays driving assistance information to a vehicle driver is desired to display a virtual image having a wide field of view.

It is thus desirable to provide a projector that makes it possible to display a virtual image having a wide field of view.

A projector according to an embodiment of the present disclosure includes: a display apparatus; a reflective mirror that reflects a light flux outputted from the display apparatus in a predetermined direction; and a retroreflector that reflects the light flux incident via the reflective mirror substantially in an incident direction.

In the projector according to one embodiment of the present disclosure, the light flux outputted from the display apparatus is guided to the retroreflector via the reflective mirror. This makes it possible to render a virtual image having a wide angle of view without using, for example, a huge mirror optical system.

Brief Description of the Drawings

[FIG. 1] FIG. 1 is a schematic view of a configuration example of a projector according to an embodiment of the present disclosure.
[FIG. 2] FIG. 2 is a functional block diagram illustrating a configuration of a display apparatus illustrated in FIG. 1.
[FIG. 3] FIG. 3 is a schematic plan view of a retroreflector.
[FIG. 4] FIG. 4 is an explanatory schematic cross-sectional view of the retroreflector illustrated in FIG. 2.
[FIG. 5] FIG. 5 is a schematic view of a configuration example in which the projector illustrated in FIG. 1 is installed in a vehicle.
[FIG. 6] FIG. 6 is a schematic plan view of a configuration example of the retroreflector illustrated in FIG. 5.
[FIG. 7] FIG. 7 is a schematic view of a cross-sectional configuration example of the retroreflector illustrated in FIG. 5 and reflection of a light beam.
[FIG. 8A] FIG. 8A is an explanatory view of a relationship of a pupil position at which a wide-angle image is visible.
[FIG. 8B] FIG. 8B is an explanatory view of entry of each light flux illustrated in FIG. 8A to a human eye.
[FIG. 9] FIG. 9 is a schematic view of an example of a configuration of a display apparatus in the projector illustrated in FIG. 5.
[FIG. 10] FIG. 10 is a schematic view of another example of the configuration of the display apparatus in the projector illustrated in FIG. 5.
[FIG. 11] FIG. 11 is a perspective view of a configuration example of a pupil replication device.
[FIG. 12] FIG. 12 is an explanatory view of a principle of pupil replication in an X-axis direction.
[FIG. 13] FIG. 13 is an explanatory view of a compensation relationship between diffraction and chromatic dispersion.
[FIG. 14] FIG. 14 is an explanatory view of a principle of pupil replication in a Y-axis direction.
[FIG. 15] FIG. 15 is a schematic view of an example of a configuration of a general projector.
[FIG. 16] FIG. 16 is a schematic view of another example of the configuration of the general projector.
[FIG. 17] FIG. 17 is a schematic view of a configuration example of a projector according to Modification Example 1 of the present disclosure.

[FIG. 18] FIG. 18 is a schematic view of a configuration example of a projector according to Modification Example 2 of the present disclosure.

[FIG. 19] FIG. 19 is an explanatory view of a mechanism of pupil tracking in the projector illustrated in FIG. 18.

[FIG. 20A] FIG. 20A is an explanatory view of a sweep amount of a mirror device and a shift amount of an eye-box to perform the pupil tracking in the projector illustrated in FIG. 18.

[FIG. 20B] FIG. 20B is an explanatory diagram illustrating a method of calculating Expression (3).

[FIG. 21A] FIG. 21A is a schematic view of another example of the configuration of the projector according to Modification Example 2 of the present disclosure.

[FIG. 21B] FIG. 21B is a schematic view of another example of the configuration of the projector according to Modification Example 2 of the present disclosure.

[FIG. 22] FIG. 22 is an explanatory view of a relationship between a sweep amount of a mirror device and a shift amount of an eye-box to perform pupil tracking in the projector disposed outside and inside a vehicle according to Modification Example 2 of the present disclosure.

[FIG. 23] FIG. 23 is a schematic view of a configuration example of a projector according to Modification Example 3 of the present disclosure.

[FIG. 24] FIG. 24 is an explanatory view of an example of a combination of a pupil replication technology and a pupil tracking technology.

[FIG. 25] FIG. 25 is a schematic view of an example of a configuration of a retroreflector according to Modification Example 4 of the present disclosure.

[FIG. 26] FIG. 26 is a schematic view of another example of the configuration of the retroreflector according to Modification Example 4 of the present disclosure.

[FIG. 27] FIG. 27 is a schematic plan view of the retroreflector illustrated in FIG. 26.

[FIG. 28A] FIG. 28A is a schematic view of an example of a cross-sectional configuration of the retroreflector illustrated in FIG. 27.

[FIG. 28B] FIG. 28B is a schematic view of another example of the cross-sectional configuration of the retroreflector illustrated in FIG. 27.

Modes for Carrying Out the Invention

Hereinafter, an embodiment of the present disclosure is described in detail with reference to the drawings. The following description is a specific example of the present disclosure, and the present disclosure is not limited to the following embodiment. Moreover, the present disclosure does not limit the disposition, dimensions, B dimension ratios, and the like of respective components illustrated in the drawings thereto. It is to be noted that description is given in the following order.

1. Embodiment (an example of a projector using a retroreflector)
2. Modification Examples

2-1. Modification Example 1 (another example of the projector)
2-2. Modification Example 2 (another example of the projector)
2-3. Modification Example 3 (another example of the projector)
2-4. Modification Example 4 (another example of the retroreflector)

<1. Embodiment>

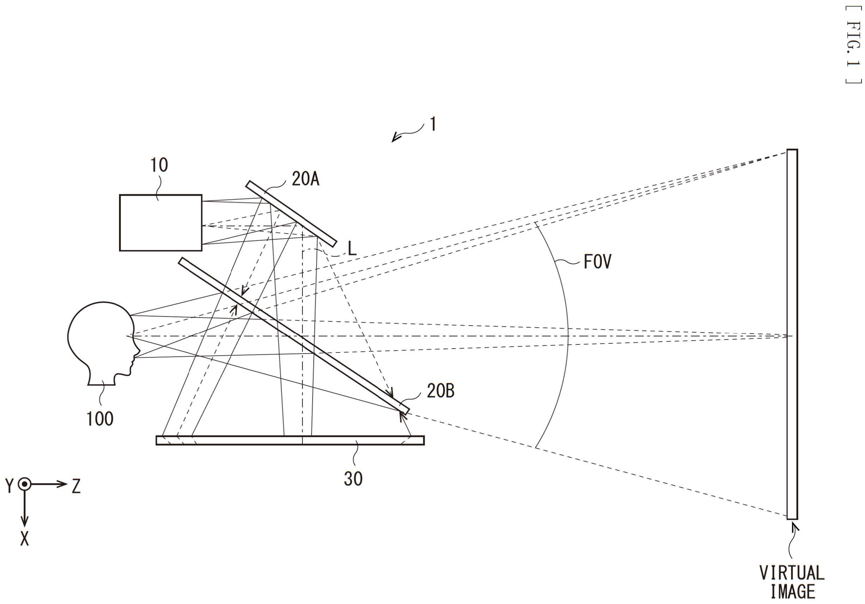

FIG. 1 illustrates a configuration example of a projector (projector 1) according to an embodiment of the present disclosure. The projector 1 is to be used in, for example, a head-up display (HUD) that displays a speed, navigation, or the like to a driver in a front seat of a vehicle, and displays a virtual image including driving support information and alert information through use of reflection of light on a windshield.

[Configuration of Projector]

The projector 1 includes a display apparatus 10, reflective mirrors 20A and 20B, and a retroreflector 30.

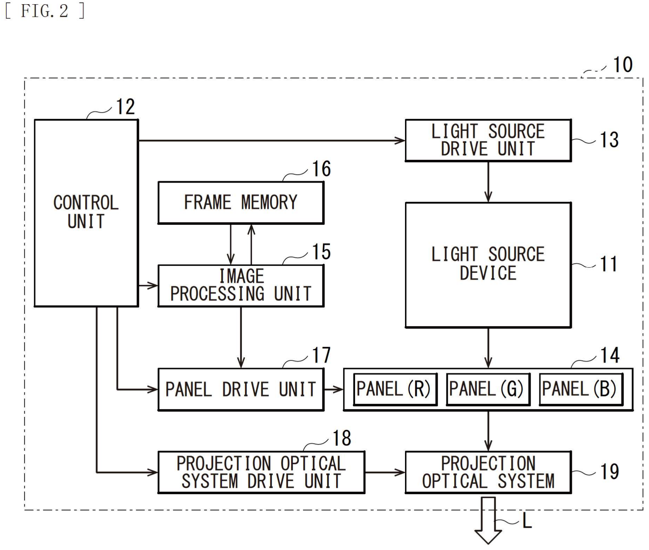

FIG. 2 is a functional block diagram illustrating the configuration of the display apparatus 10. The display apparatus 10 is a display apparatus that projects a virtual image in front of an observer 100. The display apparatus 10 is coupled to, for example, an unillustrated external image suppling device, such as a PC, other computers, or various image players, via an I/F (interface), and projects a virtual image on the basis of an image signal input to this interface.

The display apparatus 10 includes, for example, a light source device 11, a control unit 12, a light source drive unit

EP 4 700 454 A1

13, a light modulation device 14, an image processing unit 15, a frame memory 16, a panel drive unit 17, a projection optical system drive unit 18, and a projection optical system 19.

Although not particularly illustrated, the light source device 11 includes a light source driver that drives a light source, and a current value setting unit that sets each current value used at the time of driving the light source. On the basis of electric power supplied from an unillustrated power supply circuit, the light source driver is synchronized with a signal input from the light source drive unit 13 to generate a current having a current value set by the current value setting unit. Each generated current is supplied to the light source.

The control unit 12 controls the light source drive unit 13, the image processing unit 15, the panel drive unit 17, and the projection optical system drive unit 18.

The light source drive unit 13 outputs a signal for controlling light emission timing of the light source disposed in the light source device 11. The light source drive unit 13 includes, for example, a PWM setting unit, a PWM signal generating unit, a limiter, and the like, which are unillustrated, and controls the light source driver of the light source device 11 on the basis of the control of the control unit 12 to perform PWM control of the light source, thereby turning on and off the light source or adjusting a luminance.

The light modulation device 14 generates image light by modulating the light (illumination light) outputted from the light source device 11 on the basis of an image signal. The light modulation device 14 includes, for example, three light bulbs corresponding to respective colors of RGB to be described later. Examples of the light modulation device 14 include a liquid crystal display panel (panel (B)) that modulates blue light (B), a liquid crystal display panel (panel (R)) that modulates red light (R), and a liquid crystal display panel (panel (G)) that modulates green light (G). Color light beams of RGB modulated by the light modulation device 14 are combined by an unillustrated cross dichroic prism or the like to be guided to the projection optical system 19.

The image processing unit 15 acquires the image signal input from the outside to discriminate an image size, discriminate a resolution, discriminate whether the image is a still image or a moving image, and the like. In the case of a moving image, an attribute or the like of image data such as a frame rate is also determined. Further, when the resolution of the acquired image signal is different from the display resolution of the light modulation device 14, resolution conversion processing is performed. The image processing unit 15 loads the image subjected to those pieces of processing to the frame memory 16 for each frame, and outputs the image of each frame loaded to the frame memory 16 as a display signal to the panel drive unit 17.

The panel drive unit 17 drives the light modulation device 14. With the drive by the panel drive unit 17, the transmittance of light in each pixel arranged in the light modulation device 14 is changed, and thus an image is formed.

The projection optical system drive unit 18 includes a motor that drives a lens disposed in the projection optical system 19. The projection optical system drive unit 18 drives, for example, the projection optical system 19 in accordance with the control of the control unit 12 to perform, for example, zoom adjustment, focus adjustment, aperture adjustment, and the like.

The projection optical system 19 includes a lens group or the like to cause the light modulated in the light modulation device 14 to be formed as an image.

It is to be noted that the display apparatus 10 may include, as the light modulation device 14, a time-division projector employing a single plate method that uses one liquid crystal display panel, in addition to the three-plate method using three liquid crystal display panels as described above.

The reflective mirrors 20A and 20B reflect a light flux outputted from the display apparatus 10 in a predetermined direction. In this case, the reflective mirror 20A reflects a light flux outputted from the display apparatus 10 toward the retroreflector 30. The reflective mirror 20B is a transparent plate disposed between the reflective mirror 20A and the retroreflector 30, and reflects the light flux reflected by the retroreflector 30 toward a portion around an eye of the observer 100 by partial reflection.

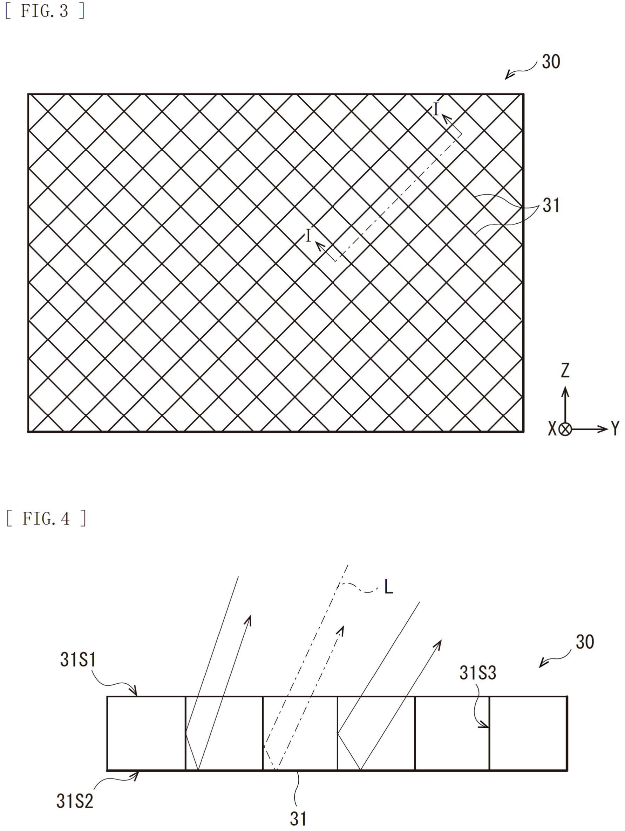

The retroreflector 30 reflects a light flux having been incident on the retroreflector 30 via the reflective mirror 20 substantially in an incident direction. The retroreflector 30 includes, for example, as illustrated in FIG. 3, a plurality of retroreflective elements 31 arranged in a two-dimensional array shape. Each of the retroreflective elements 31 is, for example, an element obtained by disposing in combination three plane mirrors as vertices of a cube at right angles to each other with reflective surfaces being disposed on the inner side. FIG. 4 schematically illustrates a cross-sectional configuration of the retroreflector 30 corresponding to a line I-I illustrated in FIG. 3. For example, as illustrated in FIG. 4, a light beam (light L) having been incident on each of the retroreflective elements 31 is sequentially and repeatedly specularly-reflected at each of the reflective surfaces (for example, a bottom surface (surface 31S2) and a side surface (surface 31S3) of the retroreflective element 31), resulting in that the light finally returns in the incident direction.

The projector 1 of the present embodiment causes the reflective mirror 20A to reflect the light flux outputted from the display apparatus 10 disposed above the observer 100 toward the retroreflector 30 disposed below the observer 100. The light flux from each image height is incident on the retroreflector 30 before being formed an an image as convergent light, and, as a result of repeatedly specularly-reflected in each of the retroreflective elements 31, returns in the incident direction as divergent light. The divergent light outputted from the retroreflector 30 is partially reflected by the reflective mirror 20B obliquely disposed in front of the observer 100 to be incident on a portion around the eye of the observer 100. This allows a far virtual image having a wide field of view (wide FOV) to be displayed in front of the observer 100.

[Installation Example to Vehicle]

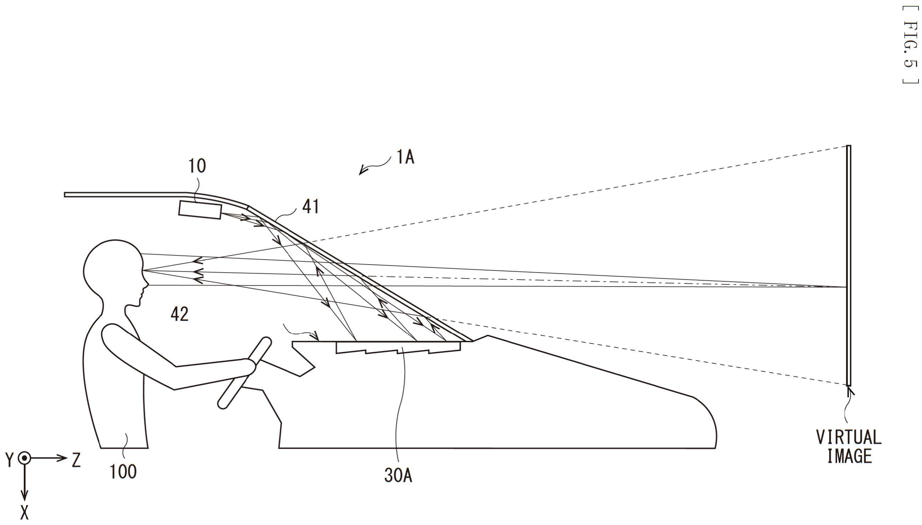

FIG. 5 illustrates a configuration example (projector 1A) in which the above-described projector 1 is installed in a vehicle. In the projector 1A, for example, the display apparatus 10 is installed on a ceiling in the vehicle, the retroreflector 30 is disposed in a dashboard, and a windshield 41 serves as the reflective mirrors 20A and 20B. In the projector 1A, a special retroreflector (special retroreflector 30A) in which the bottom surface (surface 31S2) of each of the retroreflective elements 31 is inclined is used as the retroreflector 30.

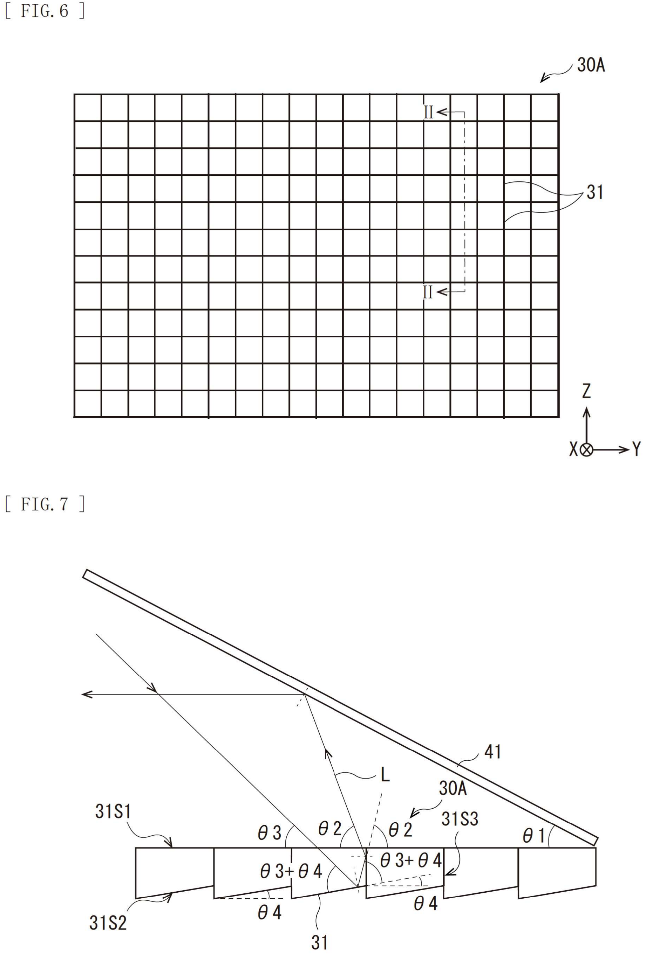

FIG. 6 schematically illustrates a planar configuration of the special retroreflector 30A. FIG. 7 schematically illustrates a cross-sectional configuration of the special retroreflector 30A corresponding to a line II-II illustrated in FIG. 6.

In the projector 1A, the windshield 41 serves as the reflective mirror 20A that reflects the light flux outputted from the display apparatus 10 toward the retroreflector 30, and the reflective mirror 20B that reflects the light flux reflected by the retroreflector 30 toward a portion around the eye of the observer 100 by partial reflection. In the case of such a configuration, in a general retroreflector 30 as illustrated in FIG. 3 and FIG. 4, return light is reflected by the windshield again to be directed to a light emitting point of the display apparatus 10.

The special retroreflector 30A includes, as illustrated in FIG. 6 and FIG. 7, a plurality of retroreflective elements 31 each having an inclined bottom surface (surface 31S2). For example, the plurality of retroreflective elements 31 is arranged in an array shape in a row direction (X-axis direction) and a column direction (Y-axis direction). Here, an angle formed between the windshield 41 and a light incident surface of the special retroreflector 30A (incident surface (surface 31S1) of the retroreflective element 31) is represented by θ1, an angle of light L returning to the windshield 41 from the special retroreflector 30A is represented by θ2, an angle of the light L incident on the special retroreflector 30A is represented by θ3, and an inclination angle of a bottom surface of the special retroreflector 30A (bottom surface (surface 31S2) of the retroreflective element 31) is represented by θ4. In the special retroreflector 30A, the bottom surface (surface 31S2) of each of the retroreflective elements 31 is inclined to direct its distal end upward relative to a direction of travel of the vehicle, and the angle θ3 of the incident light L has a relationship (θ3 < θ2) of becoming an obtuse angle with respect to the windshield 41. The angle θ2 at which the light L having been incident on the special retroreflector 30A at the angle of θ3 and reflected by the bottom surface (surface 31S2) of the retroreflective element 31 having the inclination angle of θ4 returns in the direction of the windshield 41 is expressed by Expression (1) below.
[Math. 1]

$$\theta3 + (2 \times \theta4) = \theta2 \quad \cdots (1)$$

As described above, with the bottom surface (surface 31S2) of each of the retroreflective elements 31 being inclined, return light that is non-coaxial with incident light is achieved, and the divergent light outputted from the special retroreflector 30A is partially reflected by the windshield 41 and thus the divergent light is incident on a portion around the eye of the driver (observer 100). This makes it possible for the observer 100 to visually recognize a virtual image having a wide FOV at a distant place.

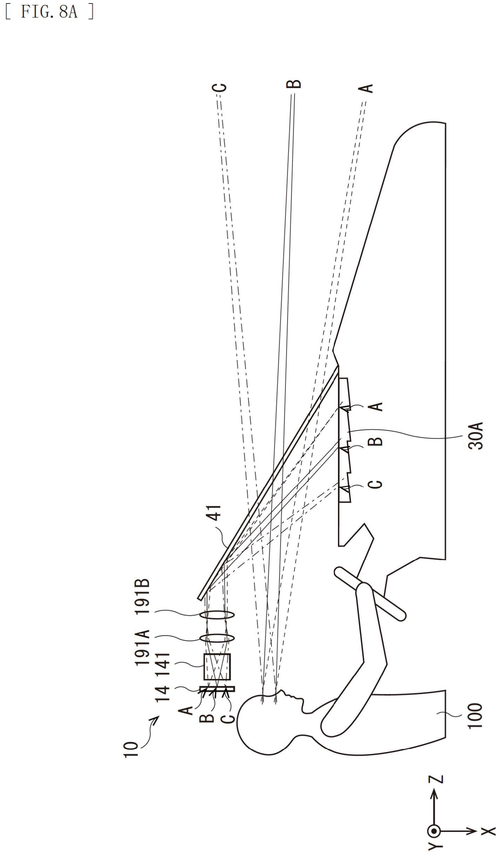

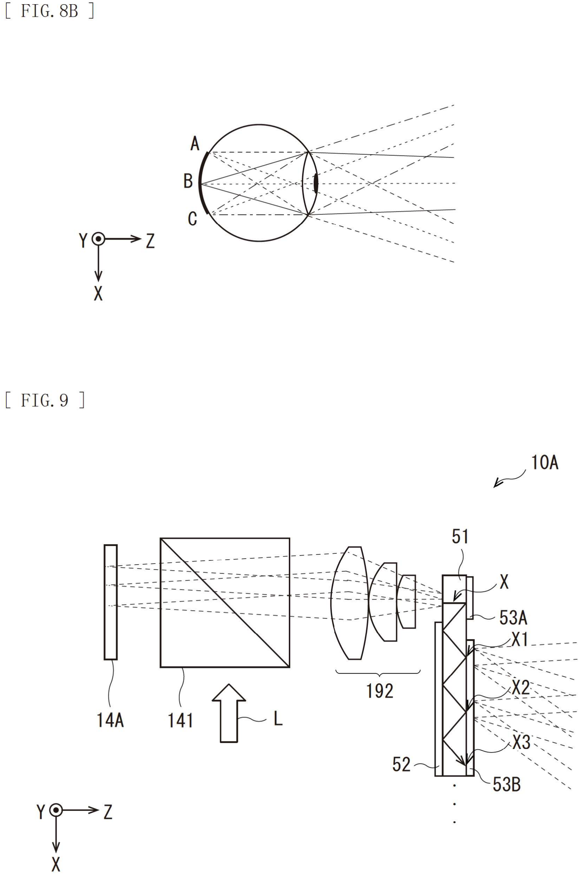

FIG. 8A describes a relationship of a pupil position at which a wide-angle image is visible. FIG. 8B describes entry of each light flux illustrated in FIG. 8A to an eye of the observer 100. A conjugate point of a light flux coming into the eye of the observer 100 is considered. For example, as illustrated in FIG. 8A, light fluxes respectively outputted from image heights of A, B, and C of the light modulation device 14 are outputted from the display apparatus 10 via a polarization beam splitter (PBS) 141 and a plurality of projection lenses 191A and 191B. The light fluxes outputted from the respective image heights of A, B, and C are reflected by the windshield 41 to propagate through a space, and are returned substantially in the incident direction by the special retroreflector 30A. The return light from the special retroreflector 30A is directed toward the eye of the observer 100 by partial reflection caused by the windshield 41. At this time, as illustrated in FIG. 8B, the light fluxes outputted from the respective image heights of A, B, and C are superimposed again at the pupil position of the eye of the observer 100 to form an image on a retina, and thus a virtual image is visible. That is, a position at which the light fluxes are superimposed is the only point at which the entire image is visible, and the image is invisible in the case of deviation. However, the pupil position of the eye of the observer 100 changes due to vibration of the vehicle during driving and individual differences such as a sitting height. It is thus desired to expand a point at which the light fluxes are superimposed (eye-box) at which the entire image is visible.

For example, it is possible to expand the eye-box as follows.

FIG. 9 illustrates an example (display apparatus 10A) of a configuration of a display apparatus corresponding to expansion of the eye-box in a body-axis direction (X-axis direction) of the observer 100. The display apparatus 10A uses, for example, an intensity modulation panel 14A of a liquid crystal on silicon (LCOS) type or a digital lighting processing (DLP) type to apply illumination light (light L) with picture information being provided thereon. The display apparatus 10A includes, for example, the intensity modulation panel 14A, the PBS 141, a projection lens 192 including a plurality of lenses and having a pupil at the exit, and a light guide plate 51 extending in the X-axis direction. It is possible to use a semiconductor laser (Laser Diode: LD) or a light emitting diode (Light Emitting Diode: LED) as the light source. As another example, an excitation light source such as a phosphor may be used.

The light guide plate 51 is, for example, a so-called holographic light guide plate including a light reflecting film 52 on one of a pair of opposing surfaces and hologram optical elements (HOE) 53A and 53B on the other surface, and is disposed at a pupil position X of the projection lens 192. The HOE 53A causes the incident light to propagate in the light guide plate 51, and is disposed at the pupil position X. The HOE 53B extracts light from the light guide plate 51, and is disposed at one or a plurality of locations after the propagation. This allows a plurality of pupils X1, X2, and X3 to be replicated in the X-axis direction.

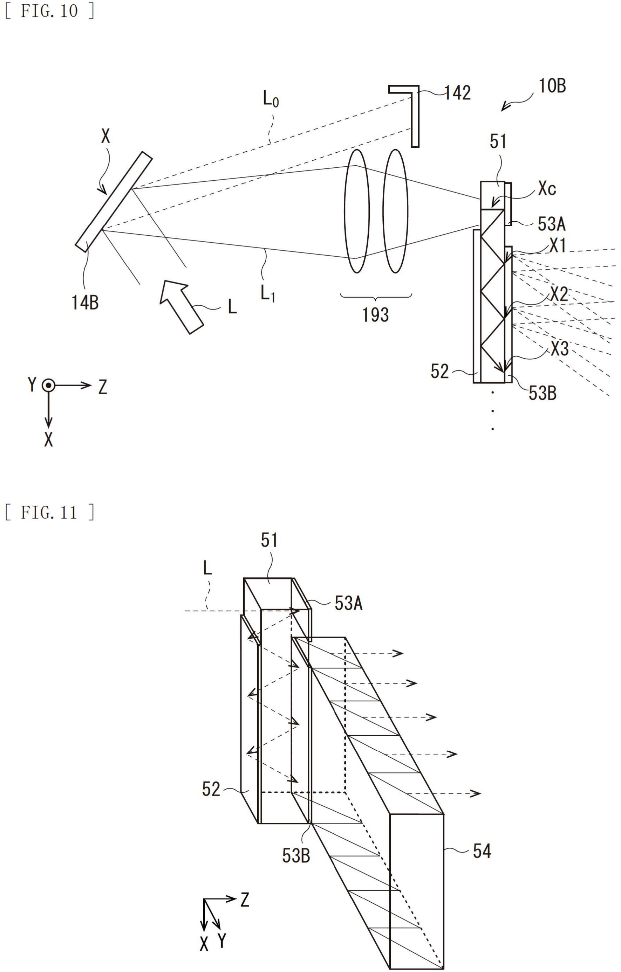

FIG. 10 illustrates another example (display apparatus 10B) of the configuration of the display apparatus corresponding to expansion of the eye-box in the body-axis direction (X-axis direction) of the observer 100. The display apparatus 10B irradiates, for example, a phase modulation panel 14B with illumination light with picture information provided thereon. The display apparatus 10B includes, for example, the phase modulation panel 14B, a relay lens 193 including a plurality of lenses, and the light guide plate 51 extending in the X-axis direction. The display apparatus 10B uses diffraction of phase modulation, and hence preferably uses an LD as the light source. The display apparatus 10B uses first-order diffraction light $L_1$ of which phase information is modulated in the phase modulation panel 14B. Zero-th-order reflected light $L_0$ is removed as unrequired light as a black wall 142.

In the display apparatus 10B, a position on the surface of the phase modulation panel 14B becomes the pupil position X. Accordingly, the first-order diffraction light $L_1$ is relayed by the relay lens 193, and a pupil conjugate image is incident on the light guide plate 51. The first-order diffraction light $L_1$ having been incident on the light guide plate 51 propagates in the light guide plate 51 by the HOE 53A disposed at a pupil conjugate position Xc similarly to the display apparatus 10A, and is extracted from the HOE 53B disposed at one or a plurality of locations after the propagation. This allows the plurality of pupils X1, X2, and X3 to be replicated in the X-axis direction.

FIG. 11 illustrates a configuration example of a pupil replication device aiming to expand the eye-box in the body-axis direction (X-axis direction) and a binocular direction (Y-axis direction) of the observer 100. It is possible to expand the eye-box in the body-axis direction (X-axis direction) and the binocular direction (Y-axis direction) of the observer 100 by using in combination the light guide plate 51 extending in the X-axis direction and a transmittance-adjusted prism 54 disposed on the HOE 53B. The transmittance-adjusted prism 54 extends in the Y-axis direction.

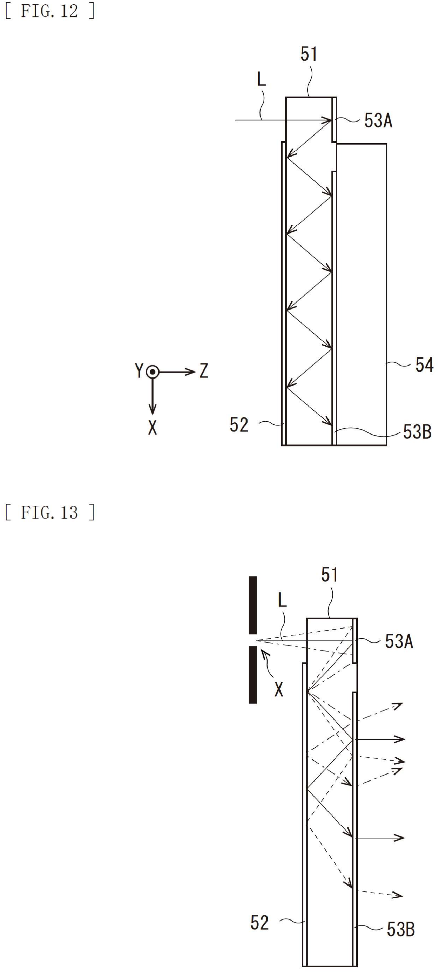

FIG. 12 illustrates a principle of pupil replication in the X-axis direction obtained by the light guide plate 51. FIG. 13 illustrates a compensation relationship between diffraction and chromatic dispersion. The chromatic dispersion of the light L having been incident on the light guide plate 51 is compensated for by the HOEs 53A and 53B corresponding to input and output.

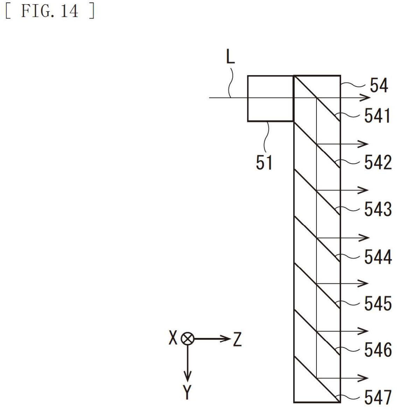

FIG. 14 illustrates a principle of pupil replication in the Y-axis direction obtained by the transmittance-adjusted prism 54. The transmittance-adjusted prism 54 includes a plurality of transmittance-adjusted prisms arranged side by side in one axial direction, and, for example, seven prisms 541, 542, 543, 544, 545, 546, and 547 are arranged side by side in the Y-axis direction. In the transmittance-adjusted prism, n prisms arranged side by side in the one axial direction have transmittances adjusted step by step. When a reflectance of a prism arranged in the first stage is set to (N-1)/N and a reflectance of each of prisms arranged in the second stage and thereafter is set to 1/(N-n+1), the amount of light outputted from each surface is equalized. For example, when the amount of light incident on the transmittance-adjusted prism is represented by P, and N-stage prisms are provided, the amount of light outputted from the n-th prism surface is expressed by Expression (2) below.
[Math. 2]

$$\text{Output Light Amount} = P \times \left[\frac{N-1}{N}\right] \times \left[\prod_2^{n-1}\left[1 - \frac{1}{N-n+1}\right]\right] \times \left[\frac{1}{N-n+1}\right] \quad \cdot \cdot \cdot (2)$$

With those being set to appropriate values, it is possible to output the same amount of light from each of the prisms 541, 542, 543, 544, 545, 546, and 547. This makes it possible to visually recognize an image having a constant intensity even at any location in the eye-box.

[Workings and Effects]

In the projector 1 of the present embodiment, the light flux outputted from the display apparatus 10 is guided to the retroreflector 30 via the reflective mirror 20A. This allows a virtual image having a wide field of view to be rendered without using, for example, a huge mirror optical system. Description of this is hereinafter given.

In recent years, development of an HUD system is in progress. The HUD system displays a speed, navigation, or the like toward a driver in a front seat of a vehicle, and displays a virtual image including driving support information and alert information through use of reflection of light on a windshield.

In general, from restrictions in size of display equipment, an HUD that performs display only in a region of about 10 degrees in field of view (center region on the front side) has been a limit of the existing HUD. Meanwhile, in a computer graphics (CG) world, a windshield displaying in superimposition caution information and augmented reality (AR) information in full screen is frequently seen. However, a device that actually implements this display does not exist yet, and none are installed on an actual vehicle.

For example, there is also a method of disposing a display apparatus in a dashboard area to cause a virtual image to be visible in a wide range in a floated manner by using a Pepper's ghost effect. In this method, the virtual image is visible in a floated manner only by an amount corresponding to a distance between the display apparatus and the windshield, and hence far virtual image display is disabled. Thus, there is no existing technology of displaying a virtual image with a wide FOV at a distant place, and one that brings the CG world depicted by ideals to reality does not exist.

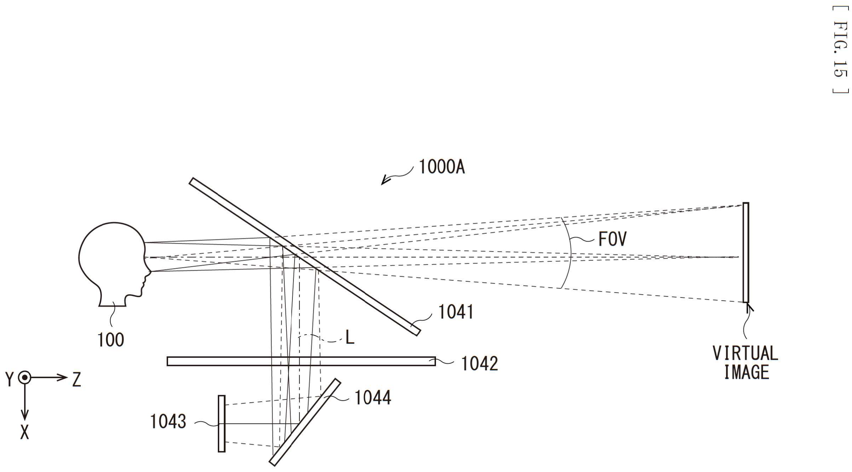

FIG. 15 illustrates an example (projector 1000A) of a configuration of a general projector. The general projector 1000A provides light to the eye of the driver (observer 100) through use of a light source unit provided below a dashboard 1042 of a front seat of a vehicle, a mirror optical system including a display panel 1043 and a mirror 1044 that expand the light fluxes (light L) outputted from the unit, and a concave mirror optical system. As illustrated in FIG. 15, with divergent light fluxes reaching the observer 100, the observer 100 feels like the virtual image is floating at a virtual light emitting point position, but the FOV of the projector 1000A is limited to about 10 degrees as described above.

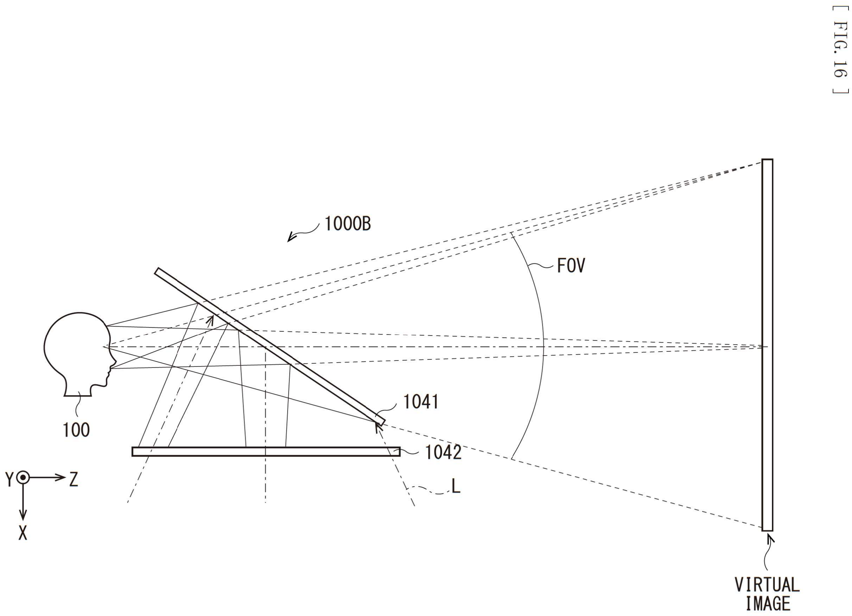

FIG. 16 illustrates another example (projector 1000B) of the configuration of the general projector. In order to increase the size of the floating virtual image, that is, in order to generate an image having a wide FOV, as illustrated in FIG. 16, it is required to generate a light flux (light L) as if the light has returned from the virtual image position (light emitting point) around the driver, the windshield, or the dashboard, and hence a convergent light flux directed from the lower side of the dashboard 1042 toward the windshield 1041 is desired. A huge optical system is required to achieve this, and hence it is not realistic to store the device below the dashboard 1042.

In contrast, in the present embodiment, the light flux outputted from the display apparatus 10 is guided to the retroreflector 30 via the reflective mirror 20A. The light flux from each of the image heights is incident on the retroreflector 30 before being formed as an image as convergent light, and returns as divergent light in the incident direction. The divergent light outputted from the retroreflector 30 is partially reflected by the reflective mirror 20B obliquely disposed in front of the observer 100 to be incident on a portion around the eye of the observer 100. This allows a virtual image having a wide FOV to be rendered in front of the observer 100.

As described above, it is possible to provide the projector 1 that makes it possible to display a virtual image having a wide FOV.

Further, in the projector 1A of the present embodiment, as the pupil replication device, for example, the light guide plate 51 extending in the X-axis direction is disposed at the pupil position X of the display apparatus 10A. This makes it possible to expand the eye-box at which the whole image is visible in the body-axis direction (X-axis direction) of the observer 100. Moreover, as the pupil replication device, the transmittance-adjusted prism 54 extending in the Y-axis direction is used in combination. This makes it possible to expand the eye-box at which the whole image is visible in the binocular direction (Y-axis direction). Thus, it is possible to respond to the change in the pupil position of the eye of the observer 100 caused by the vibration of the vehicle during driving and individual differences such as a sitting height.

Next, Modification Examples 1 to 4 of the present disclosure are described. In the following, components similar to those in the above-described one embodiment are denoted by the same reference symbols, and description thereof is omitted as appropriate.

<2. Modification Examples>

(2-1. Modification Example 1)

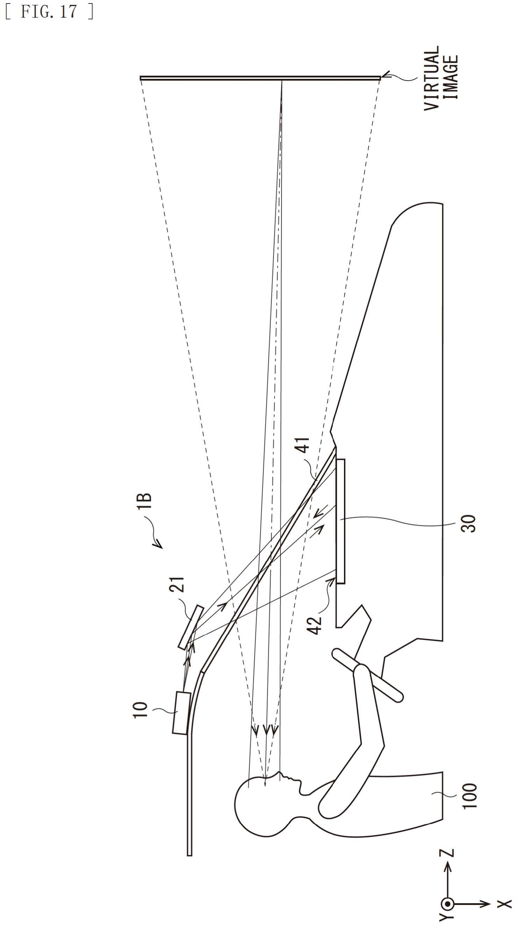

FIG. 17 illustrates a configuration example of a projector (projector 1B) according to Modification Example 1 of the present disclosure. Similarly to the above-described embodiment, the projector 1B is used in, for example, an HUD system that displays a speed, navigation, or the like toward a driver in a front seat of a vehicle, and displays a virtual image including driving support information and alert information through use of reflection of light on a windshield.

In the above-described embodiment, description has been given of an example in which the display apparatus 10 is installed on the ceiling in the vehicle. In contrast, the projector 1B of this modification example installs the display apparatus 10 outside the vehicle. In the projector 1B, for example, the display apparatus 10 and a mirror device 21 are installed on a roof of the vehicle, and the retroreflector 30 is disposed in the dashboard.

In the projector 1B, the convergent light flux outputted from the display apparatus 10 is directed toward the retroreflector 30 by the mirror device 21, and the divergent light flux from the retroreflector 30 becomes the return light to be incident on a portion around the eye of the observer 100 by partial reflection on the windshield 41. This allows a far virtual image having a wide FOV to be displayed in front of the observer 100.

In the projector 1B of this modification example, the mirror device 21 corresponds to the reflective mirror 20A that reflects the light flux outputted from the display apparatus 10 toward the retroreflector 30, and the windshield 41 corresponds to the reflective mirror 20B that reflects the light flux reflected by the retroreflector 30 toward a portion around the eye of the observer 100 by partial reflection. Accordingly, it is possible to use a general retroreflector 30 as illustrated in FIG. 3 and FIG. 4.

As described above, in this modification example, the display apparatus 10 and the mirror device 21 are installed on the roof of the vehicle, and the retroreflector 30 is disposed in the dashboard. Even with such a configuration, it is possible to obtain effects similar to those in the above-described embodiment.

(2-2. Modification Example 2)

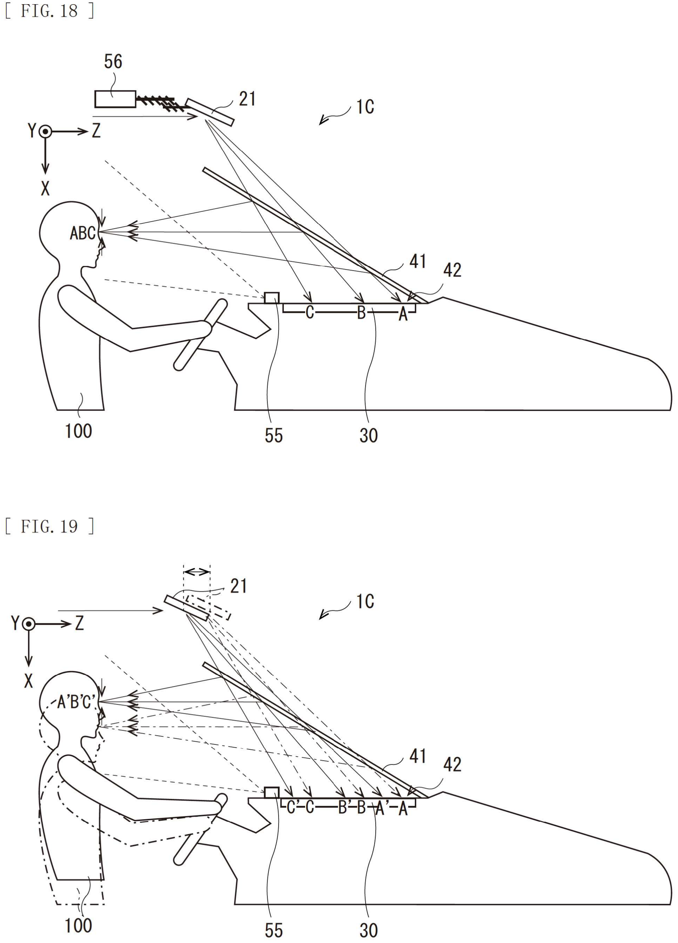

FIG. 18 illustrates an example (projector 1C) of a configuration of a projector according to Modification Example 2 of the present disclosure.

In the above-described embodiment, there has been described an example using pupil replication as the method of expanding the eye-box in the body-axis direction (X-axis direction) of the observer 100. In contrast, the projector 1C of this modification example causes the mirror device 21 to move forward and rearward in a direction of travel (Z-axis direction) of the vehicle to make the eye-box follow the pupil in the body-axis direction (X-axis direction) of the observer 100.

In the projector 1C, similarly to the projector 1B of Modification Example 1 described above, the display apparatus 10 and the mirror device 21 are installed on the roof of the vehicle, and the retroreflector 30 is disposed in the dashboard. The projector 1C further includes a detection camera 55 that detects the position of the eye of the observer 100, and a rotation motor 56 that sweeps the mirror device 21 forward and rearward. In the projector 1C, position (height) information of the eye of the observer 100 is grasped by the detection camera 55, and the amount to shift the eye-box in the X-axis direction is calculated. Thereafter, the eye-box is allowed to follow the pupil in accordance with the pupil tracking output. For example, as illustrated in FIG. 19, when the mirror device 21 is moved forward and rearward in the direction of travel (Z-axis direction) of the vehicle, the positions where the light fluxes outputted from the respective image heights A, B, and C are incident on the retroreflector 30 are shifted to A', B', and C'. Thus, the eye-box is allowed to follow the pupil in the body-axis direction (X-axis direction) of the observer 100.

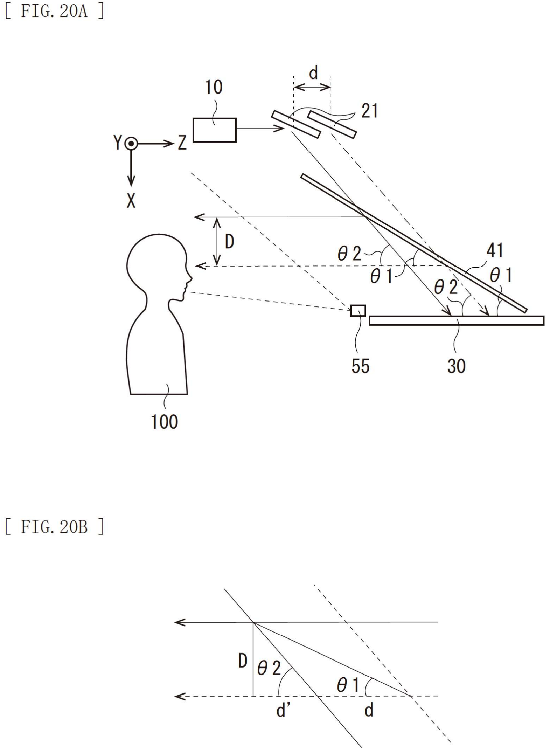

FIG. 20A and FIG. 20B describe the sweep amount of the mirror device 21 and the shift amount of the eye-box to perform pupil tracking of the observer 100. When an angle formed between the windshield 41 and the retroreflector 30 is represented by $\theta 1$ (for the sake of convenience, an angle formed between a horizontal light beam returning to the eye of the observer 100 and the windshield 41 is also represented by $\theta 1$), an angle formed by light reflected by the mirror device 21 and incident on the retroreflector 30 is represented by 02, a sweep amount of the mirror device 21 in the Z-axis direction is represented by d, and a shift amount of the eye-box is represented by D, it is possible to express the shift amount (D) of the eye-box by Expression (3) described below.

[Math. 3]

$$D = d \times tan\theta_1 \left( \frac{tan\theta_2}{tan\theta_2 - tan\theta_1} \right) \quad \cdot \cdot \cdot (3)$$

It is to be noted that it is possible to obtain Expression (3) described above by deleting d' from Expressions (4) and (5) described below.

[Math. 4]

$$D = d' \times tan\theta_2 \quad \cdot \cdot \cdot (4)$$

$$D = (d + d') \times tan\theta_1 \quad \cdot \cdot \cdot (5)$$

When it is assumed that the tilt angle $\theta 1$ of a general windshield is 40°, and the angle $\theta 2$ formed by the light reflected by the mirror device 21 and incident on the retroreflector 30 is 50°, the shift amount of the eye-box becomes 56 mm relative to the sweep amount of the mirror device 21 in the Z-axis direction of 20 mm. This indicates that tracking is possible even when the height of the eye of the driver moves by about 6 cm during driving, and it is considered to be an adjustable amount realistically.

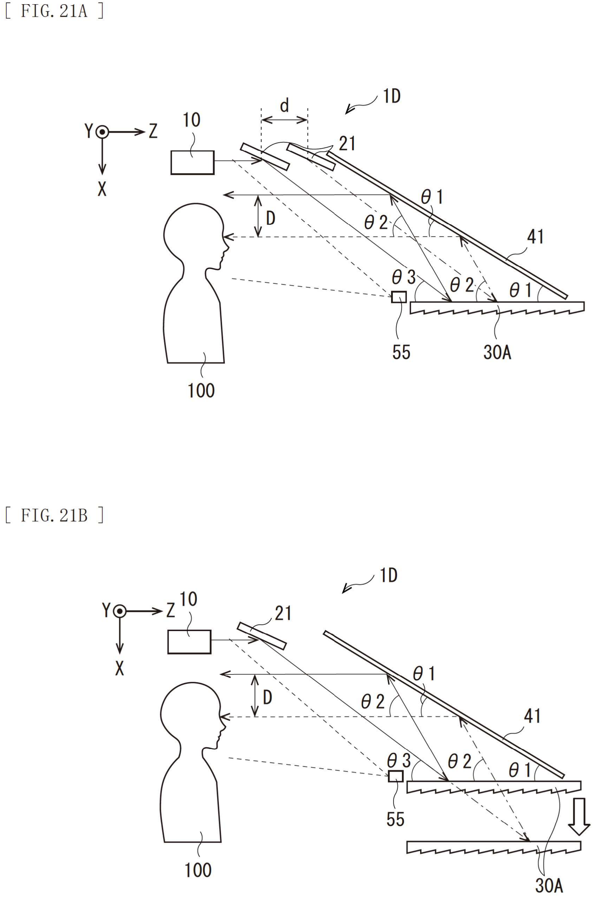

FIG. 21A illustrates another example (projector 1D) of the configuration of the projector according to Modification Example 2 of the present disclosure. In the projector 1D, similarly to the projector 1A of the above-described embodiment, the display apparatus 10 is installed on the ceiling in the vehicle, the retroreflector 30 is disposed in the dashboard, the windshield 41 serves as the reflective mirrors 20A and 20B. The special retroreflector 30A in which the bottom surface (surface 31S2) of each of the retroreflective elements 31 is inclined is used. Similarly to the projector 1C, the projector 1D includes the detection camera 55 that detects the position of the eye of the observer 100, and the rotation motor 56 that sweeps the mirror device 21 forward and rearward.

When an angle formed between the windshield 41 and the retroreflector 30 is represented by $\theta 1$ (for the sake of convenience, an angle formed between a horizontal light beam returning to the eye of the observer 100 and the windshield 41 is also represented by $\theta 1$), an angle formed by light L that returns to the windshield 41 from the special retroreflector 30A is represented by $\theta 2 = \theta 3 + 2 \times \theta 4$, a sweep amount of the mirror device 21 in the Z-axis direction is represented by d, and a shift amount of the eye-box is represented by D, it is possible to express the shift amount (D) of the eye-box by Expression (6) described below.

[Math. 5]

$$D = d \times tan\theta_1 \left( \frac{tan\theta_2}{tan\theta_2 - tan\theta_1} \right)$$

$$= d \times tan\theta_1 \left( \frac{tan(\theta_3 + 2\theta_4)}{tan(\theta_3 + 2\theta_4) - tan\theta_1} \right) \quad \cdots (6)$$

Besides, as illustrated in FIG. 21B, the projector 1D may cause the position of the special retroreflector 30A to move in the body-axis direction (X-axis direction) of the observer 100 instead of sweeping the mirror device 21 forward and rearward. This method allows the eye-box to follow the pupil as well.

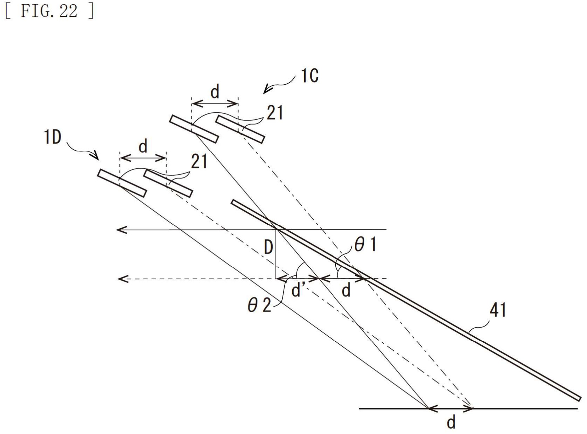

FIG. 22 describes the relationship of the sweep amount of the mirror device and the shift amount of the eye-box to perform pupil tracking in a case where the display apparatus 10 is disposed outside and inside the vehicle. In order to set the angle $\theta 2$ of the light L returning to the windshield 41 from the special retroreflector 30A to 50°, for example, the angle $\theta 3$ of the light L incident on the special retroreflector 30A is set to 40° and the inclination angle $\theta 4$ of the bottom surface of the special retroreflector (bottom surface (surface 31S2) of the retroreflective element 31) is set to 5°. Thus, similarly to the projector 1C in which the display apparatus 10 is disposed outside the vehicle, the shift amount of the eye-box becomes 56 mm relative to the sweep amount of the mirror device 21 in the Z-axis direction of 20 mm. Thus, it is considered that this configuration also achieves an adjustable amount realistically.

As described above, in this modification example, the eye-box is allowed to follow the pupil in the body-axis direction (X-axis direction) of the observer 100 by moving the mirror device 21 forward and rearward in the direction of travel (Z-axis direction) of the vehicle or moving the position of the special retroreflector 30A upward and downward. Even with such a configuration, similarly to the above-described embodiment, it is possible to substantially expand the eye-box. Thus, it is possible to respond to the change in the pupil position of the eye of the observer 100 caused by the vibration of the vehicle during driving and individual differences such as a sitting height.

(2-3. Modification Example 3)

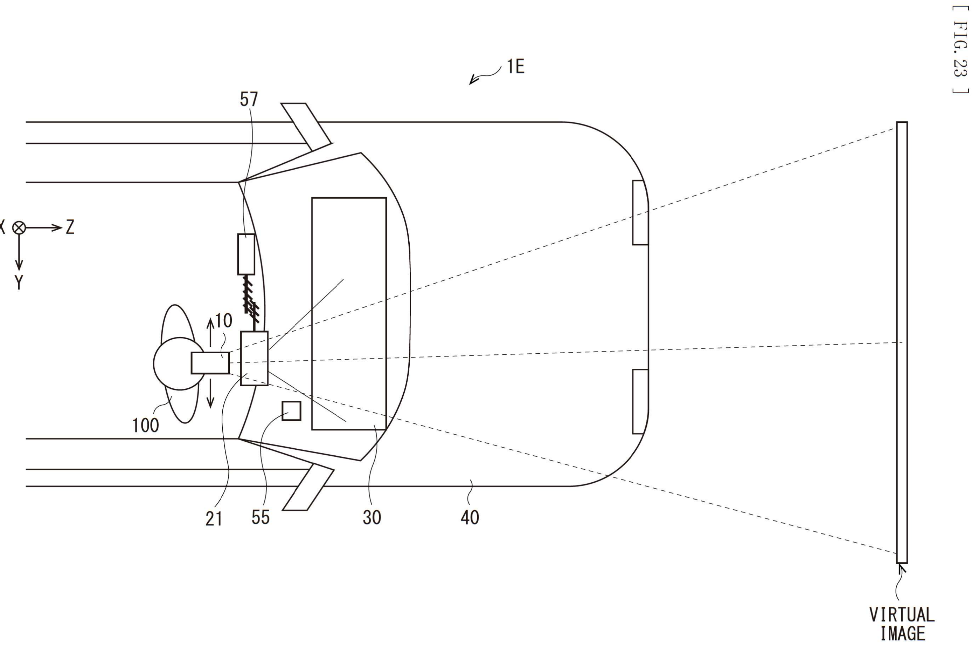

FIG. 23 illustrates a configuration example of a projector (projector 1E) according to Modification Example 3 of the present disclosure.

In the above-described embodiment, description has been given of an example using pupil replication as the method of expanding the eye-box in the binocular direction (Y-axis direction) of the observer 100. In contrast, in the projector 1E of this modification example, the eye-box is allowed to follow the pupil in the binocular direction (Y-axis direction) of the observer 100 by shifting the display apparatus 10 in the binocular direction (Y-axis direction) of the observer 100.

In the projector 1E, for example, the display apparatus 10 and the mirror device 21 are installed on a roof of a vehicle 40, and the retroreflector 30 is disposed in the dashboard. The projector 1E further includes the detection camera 55 that detects the position of the eye of the observer 100, and a rotation motor 57 that shifts the display apparatus 10 in the binocular direction (Y-axis direction) of the observer 100. In the projector 1E, as illustrated in FIG. 23, the position information of the eye of the observer 100 in the Y-axis direction is grasped by the detection camera 55, and the amount to shift the eye-box in the Y-axis direction is calculated. Thereafter, the eye-box is allowed to follow the pupil in accordance with the pupil tracking output. At this time, the movement amount of the display apparatus 10 and the shift amount of the eye-box have a relationship of 1:1.

As described above, in this modification example, the display apparatus 10 is shifted in the binocular direction (Y-axis direction) of the observer 100, and thus the eye-box is allowed to follow the pupil in the binocular direction (Y-axis direction) of the observer 100. Even with such a configuration, similarly to the above-described embodiment, it is possible to substantially expand the eye-box. Thus, it is possible to respond to the change in the pupil position of the eye of the observer 100 caused by the vibration of the vehicle during driving and individual differences such as a sitting height.

It is to be noted that, with the expansion of the eye-box in the body-axis direction (X-axis direction) and the binocular direction (Y-axis direction) of the observer 100, it is possible to achieve a projector storable in the vehicle by combining the pupil replication technology and the pupil tracking technology described in the embodiment and Modification Examples 2 and 3.

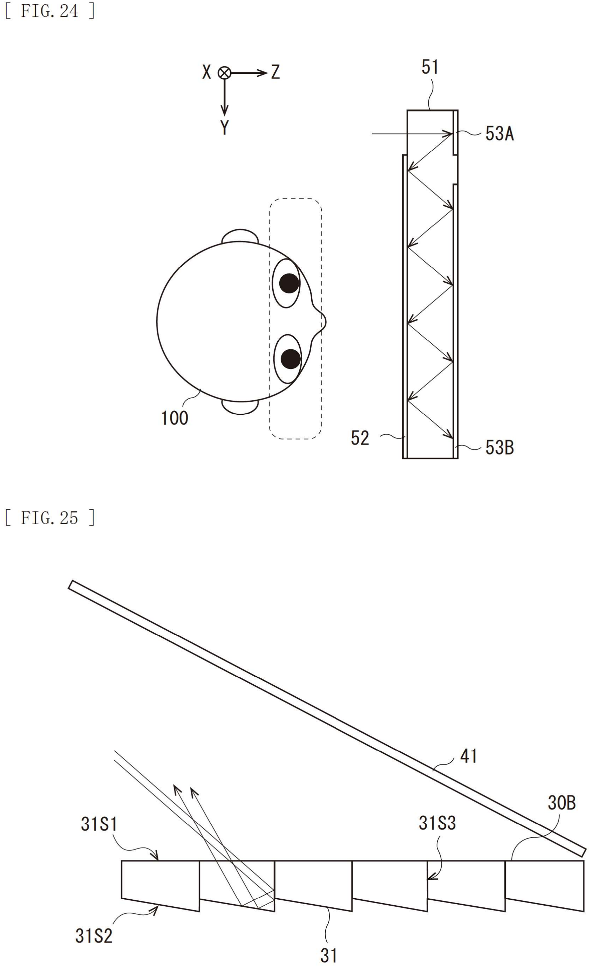

For example, with the mirror device 21 being moved forward and rearward in the direction of travel (Z-axis direction) of the vehicle, the eye-box is allowed to follow the pupil in the body-axis direction (X-axis direction) of the observer 100, and, for example, as illustrated in FIG. 24, with the pupil being replicated in the Y-axis direction by using the light guide plate 51 extending in the binocular direction (Y-axis direction), it is possible to achieve a compact projector installable in the vehicle.

(2-4. Modification Example 4)

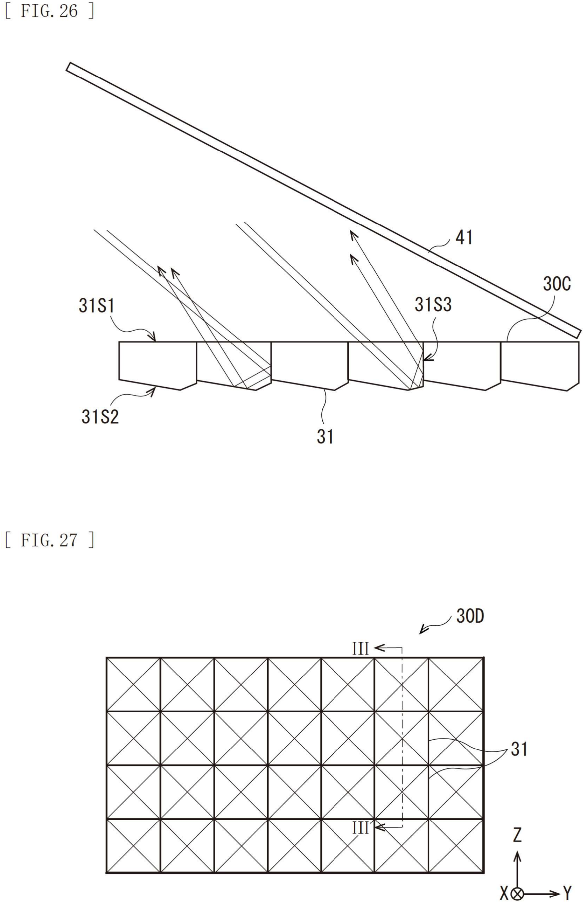

FIG. 25 schematically illustrates an example (special retroreflector 30B) of a cross-sectional configuration of a special retroreflector according to Modification Example 4 of the present disclosure. FIG. 26 schematically illustrates another example (special retroreflector 30C) of the cross-sectional configuration of the special retroreflector according to Modification Example 4 of the present disclosure.

In the above-described embodiment, description has been given of an example using the special retroreflector 30A in which the bottom surface (surface 31S2) of each of the retroreflective elements 31 is inclined to direct its distal end upward relative to the direction of travel of the vehicle, but the present disclosure is not limited thereto. The bottom surface (surface 31S2) of each of the retroreflective elements 31 may be inclined to direct its distal end downward relative to the direction of travel of the vehicle, as in the special retroreflector 30B illustrated in FIG. 25. The bottom surface (surface 31S2) of each of the retroreflective elements 31 may be bent as in the special retroreflector 30C illustrated in FIG. 26.

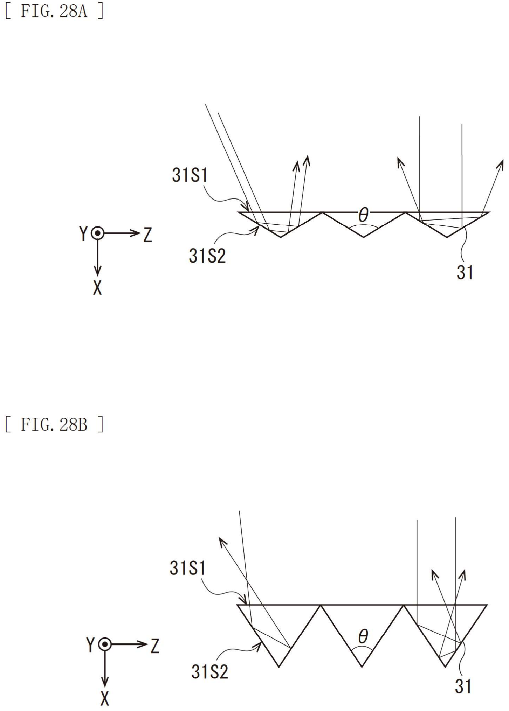

FIG. 27 schematically illustrates a planar configuration of another example (special retroreflector 30D) of the cross-sectional configuration of the special retroreflector according to Modification Example 4 of the present disclosure. FIG. 28A and FIG. 28B schematically illustrate examples of the cross-sectional configuration of the special retroreflector 30D corresponding to a line III-III illustrated in FIG. 27. The special retroreflector 30D includes retroreflective elements 31 disposed in an array shape in the row direction (X-axis direction) and the column direction (Y-axis direction). Each of the retroreflective elements 31 has a quadrangular pyramid shape in which an apex angle $\theta$ is larger than 90° or the apex angle $\theta$ is smaller than 90°. Through use of such a special retroreflector 30D, similarly to the above-described embodiment, it is possible to provide the projector 1 that makes it possible to display a virtual image having a wide FOV.

The present disclosure has been described above by means of the embodiment and Modification Examples 1 to 4, but the present disclosure is not limited to the above-described embodiment and others, and various modifications may be made thereto. For example, the disposition, number, and the like of components of an optical system exemplified in the above-described embodiment and others are merely examples. Not all of the components are required to be included, and other components may further be included.

It is to be noted that the effects described herein are merely exemplary and are not limited to the description, and may further include other effects.

The present technique may also have the following configurations. According to the present technology of the following configurations, the light flux outputted from the display apparatus is guided to the retroreflector via the reflective mirror. Thus, it is possible to render a virtual image having a wide field of view without using, for example, a huge optical system. Thus, it is possible to provide a projector that makes it possible to display a virtual image having a wide FOV.

(1) A projector including:

a display apparatus;
a reflective mirror that reflects a light flux outputted from the display apparatus in a predetermined direction; and
a retroreflector that reflects the light flux incident via the reflective mirror substantially in an incident direction.

(2) The projector according to (1), further including, between the display apparatus and the reflective mirror, a pupil replication device that replicates a pupil conjugate point in at least one of a Y-axis direction or an X-axis direction, with a human body-axis direction being defined as the X-axis direction and a binocular direction being defined as the Y-axis direction.

(3) The projector according to (2), including, as the pupil replication device, a light guide plate having one surface provided with a hologram optical element, the light guide plate extending in one of the Y-axis direction or the X-axis direction.

(4) The projector according to (3), further including, as the pupil replication device, a transmittance-adjusted prism disposed on a side of the one surface of the light guide plate, the transmittance-adjusted prism extending in another of the Y-axis direction or the X-axis direction.

(5) The projector according to any one of (1) to (4), further including, between the display apparatus and the reflective mirror, a pupil tracking device that shifts a visible region in the X-axis direction or the Y-axis direction in accordance with a position of a human pupil, with the human body-axis direction being defined as the X-axis direction and the binocular direction being defined as the Y-axis direction.

(6) The projector according to (5), including, as the pupil tracking device, a first drive unit that shifts the reflective mirror in a Z-axis direction.

(7) The projector according to (5) or (6), including, as the pupil tracking device, a second drive unit that shifts the display apparatus in the X-axis direction.

(8) The projector according to any one of (1) to (7), in which the display apparatus includes an intensity modulation panel, and a projection lens having a pupil at an exit.

(9) The projector according to any one of (2) to (8), in which the display apparatus includes a phase modulation panel, and a relay lens that guides the light flux to the pupil replication device.

(10) The projector according to any one of (1) to (9), in which

the retroreflector includes a plurality of retroreflective elements arranged in a two-dimensional array shape, and each of the plurality of retroreflective elements has a side surface and a bottom surface, the side surface being provided upright at an angle of substantially 90° relative to an incident surface on which the light flux is incident, the bottom surface being inclined and being non-parallel with the incident surface.

(11) The projector according to (10), in which the bottom surface of each of the retroreflective elements includes a first inclined surface inclined at a first angle and a second inclined surface inclined at a second angle.

(12) The projector according to (10) or (11), in which each of the retroreflective elements has the bottom surface in a quadrangular pyramid shape having an apex angle larger than 90°.

(13) The projector according to (10) or (11), in which each of the retroreflective elements has the bottom surface in a quadrangular pyramid shape having an apex angle smaller than 90°.

(14) The projector according to any one of (1) to (13), further including an inclined transparent plate.

(15) The projector according to (14), in which

the reflective mirror includes the transparent plate, and
the display apparatus and the retroreflector are disposed on a side of one surface of the reflective mirror.

(16) The projector according to (15), in which

the transparent plate includes a windshield of a vehicle, and
the display apparatus and the retroreflector are disposed inside the vehicle.

(17) The projector according to (15), in which

the display apparatus and the reflective mirror are disposed on a side of one surface of the transparent plate, and
the retroreflector is disposed on a side of another surface of the transparent plate.

(18) The projector according to (17), in which

the transparent plate includes a windshield of a vehicle, and
the display apparatus and the reflective mirror are disposed outside the vehicle, and the retroreflector is disposed inside the vehicle.

(19) The projector according to any one of (1) to (18), further including a pupil position detection camera that detects a position of a human pupil.

(20) A projector including:

a display apparatus;

a reflective mirror that reflects a light flux outputted from the display apparatus in a predetermined direction;
a retroreflector that reflects the light flux incident via the reflective mirror substantially in an incident direction; and
a pupil replication device disposed between the display apparatus and the reflective mirror, the pupil replication device replicating a pupil conjugate point in at least one of a Y-axis direction or an X-axis direction, with a human body-axis direction being defined as the X-axis direction and a binocular direction being defined as the Y-axis direction.

(21) A projector including:

a display apparatus;
a reflective mirror that reflects a light flux outputted from the display apparatus in a predetermined direction;
a retroreflector that reflects the light flux incident via the reflective mirror substantially in an incident direction; and
a pupil tracking device disposed between the display apparatus and the reflective mirror, the pupil tracking device shifting a visible region in an X-axis direction or a Y-axis direction in accordance with a position of a human pupil, with a human body-axis direction being defined as the X-axis direction and a binocular direction being defined as the Y-axis direction.

The present application claims the benefit of Japanese Priority Patent Application JP2023-068992 filed with the Japan Patent Office on April 20, 2023, the entire contents of which are incorporated herein by reference.

It should be understood by those skilled in the art that various modifications, combinations, sub-combinations and alterations may occur depending on design requirements and other factors insofar as they are within the scope of the appended claims or the equivalents thereof.

**Claims**

1.  A projector comprising:

    a display apparatus;
    a reflective mirror that reflects a light flux outputted from the display apparatus in a predetermined direction; and
    a retroreflector that reflects the light flux incident via the reflective mirror substantially in an incident direction.

2.  The projector according to claim 1, further comprising, between the display apparatus and the reflective mirror, a pupil replication device that replicates a pupil conjugate point in at least one of a Y-axis direction or an X-axis direction, with a human body-axis direction being defined as the X-axis direction and a binocular direction being defined as the Y-axis direction.

3.  The projector according to claim 2, comprising, as the pupil replication device, a light guide plate having one surface provided with a hologram optical element, the light guide plate extending in one of the Y-axis direction or the X-axis direction.

4.  The projector according to claim 3, further comprising, as the pupil replication device, a transmittance-adjusted prism disposed on a side of the one surface of the light guide plate, the transmittance-adjusted prism extending in another of the Y-axis direction or the X-axis direction.

5.  The projector according to claim 1, further comprising, between the display apparatus and the reflective mirror, a pupil tracking device that shifts a visible region in an X-axis direction or a Y-axis direction in accordance with a position of a human pupil, with a human body-axis direction being defined as the X-axis direction and a binocular direction being defined as the Y-axis direction.

6.  The projector according to claim 5, comprising, as the pupil tracking device, a first drive unit that shifts the reflective mirror in a Z-axis direction.

7.  The projector according to claim 5, comprising, as the pupil tracking device, a second drive unit that shifts the display apparatus in the X-axis direction.

8.  The projector according to claim 1, wherein the display apparatus includes an intensity modulation panel, and a projection lens having a pupil at an exit.

9. The projector according to claim 2, wherein the display apparatus includes a phase modulation panel, and a relay lens that guides the light flux to the pupil replication device.

10. The projector according to claim 1, wherein

   the retroreflector includes a plurality of retroreflective elements arranged in a two-dimensional array shape, and each of the plurality of retroreflective elements has a side surface and a bottom surface, the side surface being provided upright at an angle of substantially 90° relative to an incident surface on which the light flux is incident, the bottom surface being inclined and being non-parallel with the incident surface.

11. The projector according to claim 10, wherein the bottom surface of each of the retroreflective elements includes a first inclined surface inclined at a first angle and a second inclined surface inclined at a second angle.

12. The projector according to claim 10, wherein each of the retroreflective elements has the bottom surface in a quadrangular pyramid shape having an apex angle larger than 90°.

13. The projector according to claim 10, wherein each of the retroreflective elements has the bottom surface in a quadrangular pyramid shape having an apex angle smaller than 90°.

14. The projector according to claim 1, further comprising an inclined transparent plate.

15. The projector according to claim 14, wherein

   the reflective mirror comprises the transparent plate, and
   the display apparatus and the retroreflector are disposed on a side of one surface of the reflective mirror.

16. The projector according to claim 15, wherein

   the transparent plate comprises a windshield of a vehicle, and
   the display apparatus and the retroreflector are disposed inside the vehicle.

17. The projector according to claim 15, wherein

   the display apparatus and the reflective mirror are disposed on a side of one surface of the transparent plate, and
   the retroreflector is disposed on a side of another surface of the transparent plate.

18. The projector according to claim 17, wherein

   the transparent plate comprises a windshield of a vehicle, and
   the display apparatus and the reflective mirror are disposed outside the vehicle, and the retroreflector is disposed inside the vehicle.

19. The projector according to claim 1, further comprising a pupil position detection camera that detects a position of a human pupil.

[ FIG. 1 ]

VIRTUAL IMAGE

FOV

1

20B

L

20A

30

10

100

Y · → X

Z

[ FIG.2 ]

[ FIG. 3 ]

[ FIG. 4 ]

[ FIG. 5 ]

[ FIG. 6 ]

[ FIG. 7 ]

[ FIG. 8A ]

[ FIG.8B ]

[ FIG.9 ]

[ FIG. 10 ]

[ FIG. 11 ]

[ FIG. 12 ]

51

L

53A

54

Y⊙ →Z

X

52

53B

[ FIG. 13 ]

51

L

53A

X

52

53B

[ FIG. 14 ]

[ FIG. 15 ]

1000A

FOV

1041

L

100

1042

1044

1043

VIRTUAL IMAGE

Y ⊙ → Z

X

[ FIG. 16 ]

[ FIG. 17 ]

EP 4 700 454 A1

[ FIG. 18 ]

[ FIG. 19 ]

[ FIG. 20A ]

[ FIG. 20B ]

[ FIG. 21A ]

[ FIG. 21B ]

[ FIG. 22 ]

[ FIG. 23 ]

[ FIG. 24 ]

[ FIG. 25 ]

[ FIG. 26 ]

[ FIG. 27 ]

## INTERNATIONAL SEARCH REPORT

| | International application No. |
|---|---|
| | **PCT/JP2024/014576** |

| A. | CLASSIFICATION OF SUBJECT MATTER |
|---|---|

*G02B 27/01*(2006.01)i; *B60K 35/23*(2024.01)i; *G02B 5/122*(2006.01)i
FI:    G02B27/01; B60K35/23; G02B5/122

According to International Patent Classification (IPC) or to both national classification and IPC

| B. | FIELDS SEARCHED |
|---|---|

Minimum documentation searched (classification system followed by classification symbols)

G02B27/01; B60K35/23; G02B5/122

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | US 2021/0294097 A1 (BAYERISCHE MOTOREN WERKE AKTIENGESELLSCHAFT) 23 September 2021 (2021-09-23) paragraphs [0035]-[0039], fig. 4 | 1, 5, 7, 14-16, 19 |
| Y | | 2-6, 8-9, 17-18 |
| A | | 10-13 |
| Y | US 2014/0043689 A1 (MASON, Stephen Paul) 13 February 2014 (2014-02-13) paragraphs [0029], [0032], fig. 3-4 | 2-4, 9 |
| Y | US 2019/0212557 A1 (DIGILENS, INC.) 11 July 2019 (2019-07-11) paragraphs [0127], [0142], [0161], [0170], fig. 11, 26, 33A | 2-4, 9 |
| Y | JP 2020-126098 A (JVC KENWOOD CORP.) 20 August 2020 (2020-08-20) paragraph [0023], fig. 1-2 | 5-6 |
| Y | JP 2014-7358 A (PIONEER CORPORATION) 16 January 2014 (2014-01-16) paragraph [0035], fig. 1, 4 | 8 |

| ✓ Further documents are listed in the continuation of Box C. | ✓ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 May 2024** | **28 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

International application No.

**PCT/JP2024/014576**

**C.    DOCUMENTS CONSIDERED TO BE RELEVANT**

| Category* | Citation of document, with indication, where appropriate, of the relevant passages | Relevant to claim No. |
|---|---|---|
| Y | WO 2018/056198 A1 (NEC CORPORATION) 29 March 2018 (2018-03-29) paragraphs [0028], [0030], [0032], fig. 3 | 9 |
| Y | JP 2022-147134 A (SEIKO EPSON CORPORATION) 06 October 2022 (2022-10-06) paragraphs [0058]-[0064], fig. 11 | 17-18 |
| A | US 2016/0011346 A1 (VASYLYEV, Sergiy) 14 January 2016 (2016-01-14) entire text, all drawings | 10-13 |

Form PCT/ISA/210 (second sheet) (July 2022)

**INTERNATIONAL SEARCH REPORT**
Information on patent family members

International application No.

**PCT/JP2024/014576**

| Patent document cited in search report | | | Publication date (day/month/year) | Patent family member(s) | | | Publication date (day/month/year) |
|---|---|---|---|---|---|---|---|
| US | 2021/0294097 | A1 | 23 September 2021 | DE | 102020107859 | B3 | |
| | | | | CN | 113433692 | A | |
| US | 2014/0043689 | A1 | 13 February 2014 | GB | 2505111 | A | |
| | | | | WO | 2012/143701 | A1 | |
| | | | | EP | 2515157 | A1 | |
| | | | | CN | 103620478 | A | |
| US | 2019/0212557 | A1 | 11 July 2019 | WO | 2019/136476 | A1 | |
| JP | 2020-126098 | A | 20 August 2020 | WO | 2020/158034 | A1 | |
| JP | 2014-7358 | A | 16 January 2014 | (Family: none) | | | |
| WO | 2018/056198 | A1 | 29 March 2018 | US | 2021/0341736 | A1 | |
| | | | | paragraphs [0056], [0058], [0060], fig. 3 | | | |
| JP | 2022-147134 | A | 06 October 2022 | (Family: none) | | | |
| US | 2016/0011346 | A1 | 14 January 2016 | US | 2018/0196174 | A1 | |
| | | | | US | 2021/0149094 | A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018061444 A
- JP 2023068992 A